# EUROPEAN PATENT SPECIFICATION

(11) **EP 1 036 043 B1**
(45) Date of publication and mention of the grant of the patent: **06.03.2002**
(21) Application number: 98965737.4
(22) Date of filing: 02.12.1998
(51) Int. Cl.: C03B 37/05, C03B 37/08, C03B 5/24, G01B 11/00

(54) **PROCESS FOR THE PRODUCTION OF MAN-MADE VITREOUS FIBRES**
VERFAHREN ZUM HERSTELLEN VON GLASARTIGEN KUNSTFASERN
PROCEDE DE PRODUCTION DE FIBRES VITREUSES

(30) Priority: 02.12.1997 EP 97309674
(43) Date of publication of application: 20.09.2000
(73) Proprietor: Rockwool International A/S, DK-2640 Hedehusene (DK)
(72) Inventor: JENSEN, Soren, Lund, DK-2840 Holte (DK)
(74) Representative: Samuels, Lucy Alice
(86) International application number: EP9807827
(87) International publication number: WO9928251

(56) References cited:
- EP-A- 0 622 341
- WO-A-90/02711
- WO-A-90/07470

## Description

This invention relates to processes for making man-made vitreous fibres (MMVF) preferably utilising waste materials as part of the mineral material from which the fibres are made.

It is common practice to make MMV fibres by forming a melt from particulate mineral material and then forming fibres from this melt, for instance by a centrifugal fibre forming process.

Various types of furnace are used for forming the melt, the choice depending upon, inter alia, the composition of the charge which is to be melted and the cost effectiveness of energy sources.

One type of furnace that is widely used, especially for making fibres from rock (including stone or slag), is a shaft furnace. In this type of furnace a stack of granular mineral material is heated and melt drains to the base of the stack as a pool from which it is run off as a stream to the centrifugal fibre forming apparatus, but in some instances the melt is run from the base of the stack into another chamber where it collects as a pool and from which it is run off as a stream to the centrifugal fibre forming apparatus.

Because of the large size of conventional shaft furnaces, the period between the time of charging mineral materials to the top of the stack in the shaft furnace and the time when that mineral material has all melted is always relatively long, over an hour and often two hours or more. However the residence time of melt in the pool is always short because the pool occupies a relatively low mass (for instance below 20% and often below 10%), of the total mass of mineral material in the furnace, i.e., the mineral material including the melt pool (but excluding fuel such as coke) which is to be melted or which has melted. Thus the residence time of the molten material in the melt pool is usually less than 20 minutes and often less than 10 minutes. The residence time in the stream between the furnace or pool and the fibre forming apparatus is usually very short, typically below a minute.

Another type of furnace that is widely used, especially for making fibres from glass, is a tank furnace, by which we include gas or oil fired tank furnaces, molybdenum electrode tank furnaces and electric arc furnaces. During continuous operation, the tank furnace contains a large volume of melt, solid mineral is added to the melt and is melted into it as a result of heat energy which is applied to the furnace, and melt is run off from the furnace. The residence time of mineral in the furnace is again usually relatively long, more than an hour and often more than 2 or 3 hours, because of the large volume of the furnace. Usually the melt is run as a stream direct from the tank furnace to the centrifugal fibre forming apparatus but if desired it can be run off into a smaller chamber as a pool containing, typically, less than 20% by weight (e.g., 3 to 15%) of the mineral material in the tank furnace, and the melt in this pool can then be run off as a stream to the centrifugal fibre forming process. The residence time in the stream is again short.

Variations in the mineral charge or in the supply of energy to the mineral charge will result in variation in the melt properties.

This is liable to have a significant impact on the fibre forming process. For instance even quite small changes in the viscosity of the melt can result in significant changes in the fiberisation results, for instance as indicated by shot formation, fibre length, fibre diameter or fibre yield. Accordingly, normal practice during production of any particular fibre quality is to maintain the supply of mineral and energy to the furnace as uniform as possible and to maintain, thereby, the melt as uniform as possible.

In traditional practice, some deviation from uniformity may be observed by the trained eye of the plant operator, for instance the flow properties or the colour of the melt may be seen to change slightly. Also, fiberising properties, especially shot formation, may be seen to change. When a change is seen the plant operator may sometimes adjust the supply of mineral or energy to the furnace to try to restore the melt properties and fiberising properties to the desired uniform value.

It is also very desirable to maintain the chemical analysis of the fibres as constant as possible, within narrow limits, both for economic and performance reasons and to comply with any regulatory requirements (for instance to comply with analyses which are approved for environmental reasons).

Unfortunately the large amount of mineral material in the furnace means that it takes a long time, typically one or two hours or more, for a change in the mineral feed or the energy supply to work through the furnace sufficiently to restore the melt to the desired constant value. In practice therefore it is often necessary to make a temporary adjustment in the fiberising performance (for instance the position or speed of the fiberising rotors may be changed) to try to compensate for the change in melt properties, but this is inconvenient and further adjustment is then necessary when the melt properties are restored to their desired value.

Particular problems arise when the charge to the furnace is of variable quality, for instance when the charge includes waste materials since the waste is liable to be of variable composition.

It has been conventional practice to analyse melt samples occasionally by a slow process often occupying several hours or days. This gives useful information as regards to the long term operation of the process but does not give any useful information about controlling the process so as to achieve uniform fibre production despite possible variations in the charge to the furnace.

EP-A-622,341 describes a process of producing mineral fibres from a melt by a centrifugal fiberising process in which the position of the melt stream supplied to a rotor in the fiberising apparatus is determined and controlled by an optical technique using CCD (charged coupled device) cameras. WO-A-90/02711 describes a method of producing mineral wool from a melt by a centrifugal fiberising process, in which uniformity of the melt is obtained by electric plasma heating of the melt after it has left the furnace and before it reaches the top rotor of the fiberising apparatus, in a tapping chute.

It would therefore be desirable to be able to conduct the process in such a way that any variations in melt analysis or properties can rapidly be controlled and fiberising performance can be controlled.

A process according to the invention for forming MMV fibres comprises forming a melt by melting a charge of mineral material in a furnace, and flowing the melt to a centrifugal fiberising apparatus and thereby forming fibres by centrifugally fiberising the melt under fibre forming coniditions, and in this process the chemical analysis of the melt or the fibres is monitored in-line for deviation from a desired value and, when deviation is observed, the melt flow into the centrifugal fiberising apparatus and/or centrifugal fibre forming conditions are adjusted substantially immediately in response to the deviation.

The desired value is a chemical analysis and may relate to a physical property. It can be any set point or target analysis or property which is required. It can remain constant or it can be changed deliberately.

The chemical analysis can be conducted automatically by any suitable analytical procedure which is capable of analysing for one or several or all the elements in the melt or the fibre. Suitable automatic monitoring processes of this type include Laser Plasma Spectroscopy (LPS) or Laser Induced Breakdown Spectroscopy (LIBS) and X-Ray Fluorescence (XRF). Various types of LPS, LIBS and XRF apparatus are described in the literature and are commercially available and can be used in the invention. For instance LPS has been proposed for liquid metal analysis by Industrial Materials Institute, National Research Council Canada.

It is usually adequate to analyse for just one or a few key elements but in some instances it is desirable to make an analysis of substantially all the main elements in the melt, for instance up to 8 or 10 elements. This is particularly useful when it is desired also to monitor the viscosity, since viscosity can conveniently be monitored by calculation from knowledge of the chemical analysis and from knowledge of the temperature which may be measured by, for instance, a radiation pyrometer or a heat stable non-corrodible thermosensor.

When the viscosity is a parameter which is being monitored, the temperature must be measured on the melt, generally as it flows from the furnace to the centrifugal fiberising apparatus, but the chemical analysis can be conducted either on the fibres after they have been formed or, more usually, on the melt.

When a deviation is observed in the chemical analysis (and/or calculated viscosity) from a desired value, substantially immediate response in fibre formation is achieved in the invention, whereas this has not previously been possible.

One way of achieving this is by varying the fibre forming conditions, for instance by varying the melt viscosity or temperature or surface tension or by varying the rate of flow of melt to the fiberising apparatus and/or by varying the position of the rotor or rotors in the apparatus relative to the flow of melt and/or by varying the speed of rotation (acceleration field) of the rotor or of one or more of the rotors. Such variation can be made substantially immediately and preferably automatically in response to the monitored deviation in the analysis or viscosity of the melt. Preferably however any such control is relied upon only temporarily, since preferably the invention is utilised to cause a rapid change in the analysis and/or viscosity of the melt flowing to the centrifugal apparatus.

Thus in preferred processes the melt itself is adjusted substantially immediately. This can be done as the melt runs as a stream from the furnace to the centrifugal spinning apparatus, for instance by applying heat to the melt. In preferred processes, however, the melt is formed as a pool having a mass of less than 20% of the total mass of mineral in the furnace and the monitored analysis is used to vary the properties of the melt in the pool.

In this process, variations in the analysis or properties of the melt will start to occur but the analysis or properties are restored to the desired value much more rapidly than in prior processes because the restoration procedure is conducted on the relatively small melt pool rather than on the total charge. Thus, since the melt pool is less than 1/5th of the total charge, the properties can usually be restored in less than 1/5th of the time that would be taken if the restoration is conducted on the full charge. Typically the melt pool has a mass of 2 to 10% of the mass of the total charge and so typically the restoration can be achieved in less than 10 or 20 minutes, often substantially instantaneously, e.g., within 1 or 2 minutes at the most.

The monitoring is conducted in-line on the melt or fibres. It may be conducted occasionally but is preferably conducted substantially continuously or at predetermined regular intervals. When the monitoring shows deviation from the predetermined desired value, it is necessary to restore the melt in the melt pool to the desired value. The restoration is preferably initiated automatically in response to the deviation having been monitored, but the restoration may be conducted by manual control.

In some processes, it may be intended to rely upon prolonged addition of the restoring material in order to hold the analysis or properties of the melt at the desired value, despite prolonged inadequacies in the materials being charged to the furnace. Thus the process may be conducted using, for instance, fixed amounts of variable charge and reliance may be placed on the addition of restoring material for holding the melt analysis or properties at or near the desired value. Often, however, the restoring material is used only temporarily and an appropriate modification is made in the materials being charged to the furnace so as, gradually, to change the properties or analysis of the melt entering the melt pool back towards, and preferably to, the desired properties or analysis. Thus the amount of restoring material may be gradually reduced as the effect of a change in the charge gradually manifests itself in the melt pool.

The invention can be utilised either to maintain production quality constant (in which event the desired value will remain constant) or to facilitate a rapid change in production from one product quality to another product quality (in which event the desired value will change). For instance if it is desired to change production from a low aluminium fibre to a high aluminium fibre, the chemical analysis can be conducted for aluminium alone (or aluminium and other elements) and the "desired value" can be changed from the low value to the high value when it is desired to change production, whereupon the restoration procedure which has to be applied to the melt in the melt pool will involve the deliberate addition of aluminium-rich material to the melt pool. If desired, additional aluminium-rich material may be added to the main charge in which event the amount of aluminium-rich material which is added to the melt pool will be gradually decreased as the increased aluminium starts entering the pool from the main charge. In the invention, this reduction in the addition of high aluminium material to the pool will be controlled automatically in response to analysis for aluminium in the melt.

The restoring material must be selectively added, that is to say the amount that is added must be selected so that the desired values is substantially restored substantially immediately, in not more than 15 or 30 minutes maximum and preferably in less than 10 minutes and usually less than 5 minutes. The analysis or properties of the melt may be monitored continuously during the selective addition or may be monitored only occasionally, as required.

Soemtimes the variation is that the temperature of the melt has drifted downwards and/or the viscosity has drifted upwards. The restoring material can then be combustible material which is applied above the surface of the melt. For instance the flame of a gas or liquid fuel burner may be directed into the melt, above the melt or to the melt as it flows towards the centrifugal spinning device, or powdered carbon or other combustible material can be injected with excess oxygen above the melt pool.

When the deviation is in the chemical analysis then the restoring material may be one or more chemical compounds which are selected so as to restore the analysis to the required analysis. For instance if the analyzed amount of calcium has drifted downwards, lime can be added to or above the melt. If the analysis shows that the amount of aluminium has drifted down, then a high aluminium material such as bauxite can be added to or above the melt. Other high aluminium materials which can usefully be used in the invention for maintaining or raising the aluminium contain include crushed fire clay bricks, corund sand, and high aluminium kaolinite clay or other minerals such as gehlenite, sillimanite, kyanite and andalusite. Other suitable materials include high aluminium wastes, some of which are discussed below. Preferred wastes include those from the secondary production of aluminium, which are often generically described as "aluminium dross" or "aluminium oxide dross". In particular waste materials may be used which contain 0.5 to 10 wt.%, preferably 2 to 6 wt.%, more preferably below 5 wt.%, metallic aluminium, and 50 to 90 wt.%, preferably below 85 wt.%, more preferably 60 to 72 wt.%, alumina Al₂O₃. Wastes from the aluminium casting process are particularly useful. This process provides one specific alumina-rich waste material which is described in the industry as "alu-dross". This tends to contain significant proportions of metallic aluminium and is thus treated in order to retrieve the metallic aluminium. The alu-dross is generally crushed, milled and sieved. This produces some aluminium for resale and an aluminium-rich fraction which is sent to a furnace for reuse. As a byproduct an alumina-rich powder is also produced, described as "crushed alu-dross". The aluminium-rich fraction, optionally together with other aluminium-containing waste materials, is subjected to remelting in a furnace. This may be a rotating furnace or kiln. The aluminium waste may be subjected to plasma heating. A conventional furnace may also be used. Salt is usually added to the furnace in order to reduce the surface tension of the aluminium and reduce oxidation. This process produces an aluminium fraction for resale, more alu-dross and a salt slag material. The salt slag can be subjected to a wet chemical process (involving water washing and high temperature treatment) which produces a salt fraction, which is recycled to the furnace, and a further alumina-rich powder, described as "treated aluminium salt slag". Materials of this type are described for inclusion in briquettes in our publication number WO-A-99/28252; reference should be made to that.

Suitable high aluminium, biologically soluble, fibres which can advantageously be made in the present invention are described in WO-A-96/14454 and WO-A-96/14274. Others are described in WO-A-97/29057, DE-U-2,970,027 and WO-A-97/30002. Reference should be made to each of these. In general the fibres and the melt from which they are formed have an analysis (measured as % by weight of oxides) within the various ranges defined by the following normal and preferred lower and upper limits:
SiO₂ at least 30, 32, 35 or 37; not more than 51, 48, 45 or 43
Al₂O₃ at least 14, 15, 16 or 18; not more than 35, 30, 26 or 23
CaO at least 2, 8 or 10; not more than 30, 25 or 20
MgO zero or at least 2 or 5; not more than 25, 20 or 15
FeO (including Fe₂O₃) zero or at least 2, 5; not more than 15, 12 or 10
FeO + MgO at least 10, 12, 15; not more than 30, 25, 20
Na₂O + K₂O zero or at least 1; not more than 19, 14, 10
CaO + Na₂O + K₂O at least 10, 15; not more than 30, 25
TiO₂ zero or at least 1; not more than 6, 4, 2
TiO₂ + FeO at least 4, 6; not more than 18, 12
B₂O₃ zero or at least 1; not more than 5, 3
P₂O₅ zero or at least 1; not more than 8, 5
Others zero or at least 1; not more than 8, 5

The fibres preferably have a sintering temperature above 800°C, more preferably above 1000°C.

The melt preferably has a viscosity at fibre forming temperature of 5 to 100 poise, more preferably 10 to 70 poise at 1400°C.

The fibres preferably have an adequate solubility in lung fluids as shown by in vivo tests or in vitro tests, typically conducted in physiological saline buffered to about pH 4.5. Suitable solubilities are described in WO-A-96/14454. Usually the rate of dissolution is at least 10 or 20nm per day in that saline.

The preferred fibres which are made in the invention have an analysis which contains at least 15%, usually at least 17% and most usually at least 18% Al₂O₃, e.g., up to 30, 35 or 40%.

When the melt pool is in the base of a cupola or other shaft furnace (as is often preferred in the invention), it generally accumulates just beneath tuyeres at the base of the shaft furnace by which oxygen (air) is blown into the furnace to cause combustion of fuel in the charge. The selective addition of restoring material may be made through the tuyeres immediately above the melt because material added at this point will have a quick influence on the melt. This can be done as described in our publication WO-A-99/28246. However, the extra heating of the combustion gas may not be necessary if the amount of restoring material is low.

Alternatively, the selective addition of restoring the material is made direct into the melt pool, for instance by screw feeding the added material into the melt pool or by blowing the restoring material entrained in air or other gas by one or more lances into the melt.

When the melt pool is formed in a tank furnace, for instance which is primarily heated by electric energy, it can still be desirable to blast air into the furnace through tuyeres and/or as burner gases to promote heating within the furnace. Restoring material can then be blown with this air or combustion gas onto the melt pool or into it.

In preferred processes of the invention, the furnace containing the melt pool has, associated with it, a plurality of supplies of restoring materials available for selective addition to the melt pool, according to the observed deviation in the chemical analysis of the melt from the desired value. For instance there may be a store of limestone or other calcium compound, to provide calcium, quartz sand or other silicon compound to provide silicon, haematite or magnetite or other iron compound to provide iron, dolomite or other magnesium compound to provide magnesium and bauxite or other aluminium compound to provide aluminium. A furnace may be equipped with a control system such that one or more of these are automatically injected through tuyeres or lances into the melt pool in response to the measured chemical analysis.

Naturally the physical form of the restoring material which is being added must be such that the restoring material will rapidly melt (or burn) and be distributed throughout the pool. Usually therefore the restoring material, if it is solid, is in small powder form, typically having a size below 1 or 2mm. Similar small particle size is appropriate for material which is being blown in through the tuyeres.

The furnace can be a tank furnace, in which event the melt pool may be a chamber separate from the main tank and into which melt is run from the main tank. This chamber may be part of the construction of the tank furnace or may be in a separate construction. Generally, however, the furnace is a shaft furnace, most preferably a cupola. The melt pool may be in the base of the shaft furnace or it may be in a chamber separate from the base of the shaft furnace and into which melt is run from the base of the cupola or other shaft furnace.

The charge of mineral material to the melt may be in any conventional form, for instance briquettes or crushed mineral, and may be formed from any of the materials which are conventionally used for providing the mineral charge for the production of MMVF melts. It can include any of the virgin mineral or recycled MMVF waste or any of the relatively non-toxic waste materials which are frequently included in the charge, for instance in briquettes.

The charge preferably contains waste materials, typically in an amount of from 5 to 50% by weight, by weight of the total mineral charge. Some or all of the waste may be melted separately as described in our publication WO-A-99/28247. The melt pool should then be below 20% of the total volume of the total charge. Part of the waste can be contaminated by, for instance above 0.3% halogen or measurable amounts, e.g. above 0.01% or 0.1%, volatile materials such as mercury, lead, zinc, calcium or toxic organic materials.

Suitable waste materials which can be used include slags from the metallurgical industry, especially steelmaking slags such as converter slags, ladle slags or EAF slags, and slags from the ferro-alloy industry such as ferro-chromium, ferro-manganese or ferro-silicon slags; slags and residues from the primary production of aluminium, such as spent aluminium pot lining or red mud, and slags and residues from the secondary production of aluminium such as aluminium dross (discussed above and particularly useful for modification of amounts of aluminium in the melt) ; dried or wet sludge from the paper industry; sewage sludge; melasse; bleaching clay; residues from the incineration of household and industrial wastes, especially slags or filter ashes from the incineration of municipal solid wastes; glass waste (or slags) from the vitrification of other waste products; glass cullets; waste products from mining industry, especially minestone from the excavation of coal; residues from the incineration of fossil fuel, especially from the combustion of coal at power plants; spent abrasive sand; spent moulding sand from iron and steel casting; waste sieving sand; glass reinforced plastic; and fines and breakage waste from the ceramic and brick industry. Toxic virgin rock can also be used as the waste.

The MMV fibres may be made from the fibre forming mineral melt in conventional manner. Generally they are made by a centrifugal fibre forming process. For instance the fibres may be formed by a spinning cup process in which the melt is thrown outwardly through perforations in a spinning cup, or melt may be thrown off a rotating disc and fibre formation may be promoted by blasting jets of gas through the melt, or fibre formation may be conducted by pouring the melt onto first rotor in a cascade spinner. Preferably the melt is poured onto the first of a set of two, three or four rotors each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

## Claims

1. A process for making man-made vitreous fibres comprising forming a melt by melting a charge of mineral material in a furnace and flowing the melt to a centrifugal fiberising apparatus and forming fibres by centrifugally fiberising the melt under fibre forming conditions, **characterised in that** chemical analysis of the melt or the fibres is monitored in-line for deviation from a desired value and, when deviation is observed, the melt flowing to the centrifugal fiberising apparatus and/or the centrifugal fibre forming conditions is/are adjusted substantially immediately in response to the deviation.

2. A process according to claim 1 in which the adjustment of the melt and/or the fibre formation conditions is conducted automatically in response to the monitored deviation in the chemical analysis.

3. A process according to claim 1 or claim 2 in which the centrifugal fiberising conditions are adjusted in response to the deviation by varying the rate of flow of melt to the fiberising apparatus, by varying the position of the fiberising apparatus relative to the flow of the melt, by varying the melt viscosity or temperature or surface tension and/or by varying the acceleration field of the fiberising apparatus.

4. A process according to claim 1 or claim 2 in which the melt is formed as a pool having a mass of less than 20% of the total mass of mineral in the furnace and/or the melt is run as a stream from the furnace to the centrifugal fiberising apparatus and in which the temperature and/or the chemical analysis of the melt is altered in response to the deviation in the chemical analysis from the desired value.

5. A process according to claim 4 in which the melt is formed as a pool having a mass of less than 20% of total mass of mineral in the furnace and chemical additive is added to the melt pool in response to the deviation of the measured analysis from the desired value, whereby the analysis of the melt is restored substantially to the desired value.

6. A process according to claim 4 or claim 5 in which the melt pool collects in the base of a shaft furnace, the shaft furnace has tuyeres near its base for the injection of combustion air, and material is added through the tuyeres or by injection into the melt pool in order to restore the chemical analysis to the desired value.

7. A process according to claim 6 in which the furnace has, associated with it, a plurality of supplies of restoring materials available for selective addition to the melt pool.

8. A process according to any preceding claim in which the in-line monitoring is by Laser Plasma Spectroscopy (LPS), Laser Induced Breakdown Spectroscopy (LIBS) or X-Ray Fluorescence (XRF).

9. A process according to any preceding claim in which the melt and the fibres contain at least 15%, preferably at least 18%, Al₂O₃ (by weight measured based on oxides).

10. A process according to any preceding claim in which the desired value either remains constant during the process, or is changed during the process whereby the analysis of the fibres is changed during the process.

## Patentansprüche

1. Verfahren zur Herstellung künstlicher glasartiger Fasern, umfassend das Bilden einer Schmeize durch Schmelzen einer Charge aus mineralischem Material in einem Ofen und das Fließenlassen der Schmelze zu einer Faserbildungs-Schleudervorrichtung und das Bilden der Fasern durch Schleuderzerfasem der Schmelze bei Faserbildungsbedingungen, **dadurch gekennzeichnet, daß** die chemische Analyse der Schmelze oder der Fasem bezüglich einer Abweichung von einem gewünschten Wert mitlaufend überwacht wird und die zur Faserbildungs-Schleudervorrichtung fließende Schmelze und/oder die Bedingungen bei der Schleuderfaserbildung bei Feststellung einer Abweichung im wesentlichen sofort als Antwort auf die Abweichung adjustiert wird/werden.

2. Verfahren nach Anspruch 1, in welchem die Adjustierung der Schmelze und/ oder der Faserbildungsbedingungen als Antwort auf die überwachte Abweichung in der chemischen Analyse automatisch ausgeführt wird.

3. Verfahren nach Anspruch 1 oder Anspruch 2, in welchem die Bedingungen bei der Schleuderzerfaserung als Reaktion auf die Abweichung adjustiert werden, indem die Fließgeschwindigkeit der Schmelze zur Faserbildungsvorrichtung variiert wird, die Stellung der Faserbildungsvorrichtung relativ zum Schmelzfluß variiert wird, die Viskosität oder die Temperatur oder die Oberflächenspannung der Schmelze variiert werden und/oder das Beschleunigungsfeld der Faserbildungsvorrichtung variiert wird.

4. Verfahren nach Anspruch 1 oder Anspruch 2, in welchem die Schmelze als Sumpf mit einer Masse von weniger als 20% der Gesamtmasse an Mineralien im Ofen gebildet wird und/oder die Schmelze als Strom vom Ofen zur Faserbildungs-Schleudervorrichtung geleitet wird und in welchem die Temperatur und/oder die chemische Analyse der Schmelze als Antwort auf die Abweichung in der chemischen Analyse vom gewünschten Wert geändert wird/werden.

5. Verfahren nach Anspruch 4, in welchem die Schmelze als Sumpf mit einer Masse von weniger als 20% der Gesamtmasse an Mineralien im Ofen gebildet wird und ein chemisches Additiv als Antwort auf die Abweichung der gemessenen Analyse vom gewünschten Wert zum Schmelzsumpf gegeben wird, wodurch die Analyse der Schmelze wieder im wesentlichen auf den gewünschten Wert gebracht wird.

6. Verfahren nach Anspruch 4 oder Anspruch 5, in welchem der Schmelzsumpf am Boden eines Schachtofens gesammelt wird, der Schachtofen Windformen in der Nähe seines Bodens zum Einleiten von Verbrennungsluft aufweist und Material durch die Windformen oder durch Einführen in den Schmelzsumpf zugegeben wird, um die chemische Analyse wieder auf den gewünschten Wert zu bringen.

7. Verfahren nach Anspruch 6, in welchem der Ofen mehrere, damit assoziierte Vorräte an Nachschubmaterialien aufweist, die für die selektive Zugabe zum Schmelzsumpf zur Verfügung stehen.

8. Verfahren nach irgendeinem vorhergehenden Anspruch, in welchem die mitlaufende Überwachung durch Laserplasma-Spektroskopie (LPS), Laserinduzierte Abbau-Spektroskopie (LIBS) oder Röntgenstrahlfluoreszenz (XRF) erfolgt.

9. Verfahren nach irgendeinem vorhergehenden Anspruch, in welchem die Schmelze und die Fasern mindestens 15%, bevorzugt mindestens 18% Al₂O₃ (bezogen auf das Gewicht auf Oxidbasis) enthalten.

10. Verfahren nach irgendeinem vorhergehenden Anspruch, in welchem der gewünschte Wert entweder während des Verfahrens konstant bleibt oder sich während des Verfahrens ändert, wobei sich die Analyse der Fasern während des Verfahrens ändert.

## Revendications

1. Procédé pour la fabrication de fibres vitreuses synthétiques comprenant la formation d'une masse en fusion par fusion d'une charge de matière minérale dans un four et l'écoulement de la masse en fusion vers un appareil de formation centrifuge de fibres et la formation de fibres par formation centrifuge de fibres à partir de la masse en fusion dans des conditions de formation de fibres, **caractérisé en ce qu'**une analyse chimique de la masse en fusion ou des fibres est contrôlée en ligne pour une déviation à partir d'une valeur souhaitée et **en ce que**, lorsque l'on observe une déviation, la masse en fusion s'écoulant vers l'appareil de formation centrifuge de fibres et/ou les conditions de formation centrifuge de fibres est/sont ajustées pratiquement immédiatement en réponse à la déviation.

2. Procédé selon la revendication 1, dans lequel l'ajustement de la masse en fusion et/ou des conditions de formation des fibres est réalisé automatiquement en réponse à la déviation contrôlée de l'analyse chimique.

3. Procédé selon la revendication 1 ou la revendication 2, dans lequel les conditions de formation centrifuge de fibres sont ajustées en réponse à la déviation en faisant varier le débit de la masse en fusion vers l'appareil de formation de fibres, en faisant varier la position de l'appareil de formation de fibres par rapport à l'écoulement de la masse en fusion, en faisant varier la viscosité de la masse en fusion ou la température ou la tension superficielle et/ou en faisant varier le domaine d'accélération de l'appareil de formation de fibres.

4. Procédé selon la revendication 1 ou la revendication 2, dans lequel la masse en fusion est formée comme un bain ayant une masse inférieure à 20 % de la masse totale de matière minérale dans le four et/ou la masse en fusion s'écoule comme un courant à partir du four vers l'appareil de formation centrifuge de fibres et dans lequel la température et/ou l'analyse chimique de la masse en fusion est modifiée en réponse à la déviation de l'analyse chimique à partir de la valeur souhaitée.

5. Procédé selon la revendication 4, dans lequel la masse en fusion est formée comme un bassin ayant une masse inférieure à 20 % de la masse totale de matière minérale dans le four et un additif chimique est ajouté au bassin de la masse en fusion en réponse à la déviation de l'analyse mesurée à partir de la valeur souhaitée, l'analyse de la masse en fusion est par là pratiquement restituée à la valeur souhaitée.

6. Procédé selon la revendication 4 ou la revendication 5, dans lequel le bain de la masse en fusion est recueilli dans la base d'un four à cuve, le four à cuve présente des tuyères à proximité de sa base pour l'injection d'air de combustion et de la matière est ajoutée par l'intermédiaire des tuyères ou par injection dans le bain de la masse en fusion afin de restituer l'analyse chimique à la valeur souhaitée.

7. Procédé selon la revendication 6, dans lequel le four présente, associé à celui-ci, de nombreuses alimentations en matières de restitution disponibles pour une addition sélective au bain de la masse en fusion.

8. Procédé selon l'une quelconque des revendications précédentes, dans lequel le contrôle en ligne se fait par spectroscopie au plasma laser (LPS), par spectroscopie de rupture induite au laser (LIBS) ou par fluorescence aux rayons X (XRF).

9. Procédé selon l'une quelconque des revendications précédentes, dans lequel la masse en fusion et les fibres contiennent au moins 15 %, de préférence au moins 18 % de Al₂O₃ (en poids mesurés sur la base des oxydes).

10. Procédé selon l'une quelconque des revendications précédentes, dans lequel la valeur souhaitée soit reste constante pendant le procédé, soit est modifiée pendant le procédé, l'analyse des fibres est par là modifiée pendant le procédé.
